# EUROPEAN PATENT SPECIFICATION

(11) **EP 1 865 584 B1**
(45) Date of publication and mention of the grant of the patent: **25.06.2014**
(21) Application number: 07109549.1
(22) Date of filing: 04.06.2007
(51) Int. Cl.: F16L 5/10, F16L 5/14, H02G 3/38, H02G 3/22

(54) **Cable intake system**
Kabeleinlasssystem
Système d'entrée de câble

(30) Priority: 08.06.2006 DE 202006009182 U
(43) Date of publication of application: 12.12.2007
(73) Proprietor: Roxtec AB, 371 23 Karlskrona (SE)
(72) Inventor: Milton, Stefan, 373 02 Ramdala (SE)
(74) Representative: Karlsson, Leif Gunnar Börje

(56) References cited:
- EP-A1- 0 160 924
- EP-A1- 0 757 142
- GB-A- 777 934
- US-A1- 2006 070 319

## Description

### Technical Field

The present invention refers to a cable intake to be received in walls etc. and also a system of cable intakes.

### Prior Art

In buildings there is a need for a number of cables, pipes or other ducts to go into the building. When erecting new buildings one or more intakes for cables etc. are normally placed in one or more walls of the building during build up. Depending on the actual type of house and its intended use the number of intakes needed may vary within a wide range. Furthermore, the thickness of the wall or walls in which the intakes are placed may vary. There is therefore a need for a cable intake system that is relatively easily adaptable both regarding the number of intakes needed and the thickness of the actual wall.

Today there exist a large number of different cable intakes to be received in walls. Many of these cable intakes are adapted to one specific use depending on the type of cables, type of walls, thickness of walls etc. in a specific instance. Furthermore, the known cable intakes are normally not adapted to be used together in large numbers to form a system of cable intakes in an easy way.

US 2006/0070319 A1 shows a firewall sleeve system for preventing the propagation of fire along a cable, wire, line, pipe, conduit and the like. The firewall sleeve system is not anchored to a wall and comprises a front/male housing with a first flange area and a rear/female housing with a rear/female flange area.

EP 0 757 142 A1 shows a device to give installation lead-throughs for concrete roofs and/or walls. It has a concealed shuttering element comprising at least two foundation bodies mounted opposite one another. Several short pipes are formed in one piece on the inwardly facing surface of the fountain bodies.

EP 0 160 924 A1 shows a one-piece, unitary, molded resin wall sleeve precursor member. It has cup-shaped end sections each having a radial flange, with each flange connecting to a hollow transition section that in turn connects to one end of coaxial sleeve sections.

GB 777 934 A shows an air vent assembly comprising at least one cover plate, adapted to cover the outer end of the port in the wall, a tension spring within the port, which engages the cover plate detachably and urges it towards the wall, and aperturing associated with the cover plate for passage of air into the port.

### Summary of the Invention

Even though the present invention was developed as a cable intake system a person skilled in the art realises that it may also be used for pipes, ducts or the like. Thus, even though the expression "cable intake" is normally used in this description it should be construed broadly and it is to be understood to include all kinds of cables, pipes or ducts.

The present invention is mainly developed for concrete walls, but a person skilled in the art realises that it may also be used with other types of walls.

One important aspect of the present invention is that the number of different parts to form a suitable cable intake or system of cable intakes should be kept low. Few different parts means facilitated manufacture and storing. Another aspect of the present invention is that the cable intakes should be possible to adapt to different wall thicknesses. A further aspect is that a number of cable intakes should be easy to connect to each other in different patterns.

According to the present invention a cable intake is formed of two end parts arranged mutually displaceable on an intermediate part. The intermediate part has the form of a pipe. The end parts are identical and each end part has the form of a muff with a flange at one end of the muff, which flange forms a generally rectangular periphery outside the muff of each end part. Each muff has a central through opening. Each flange is made in one piece with the end part and has a first and second flange part. The first flange part is placed lower than the second flange part, giving an edge between the flange parts. The end parts have muffs received inside the pipe of the intermediate part. Holding pins of the end parts co-operate with holding devices of the intermediate part to guide the movements of the different parts of the cable intake. A system of cable intakes may be formed by cable intakes connected to each other in straight rows. The cable intakes are held together in that pins of one cable intake are received in holes of adjacent cable intakes.

Further objects and advantage of the present invention will be obvious to a person skilled in the art when reading the detailed description below of preferred embodiments.

### Brief Description of the Drawings

The invention will be described further below by way of an example and with reference to the enclosed drawings. In the drawings:

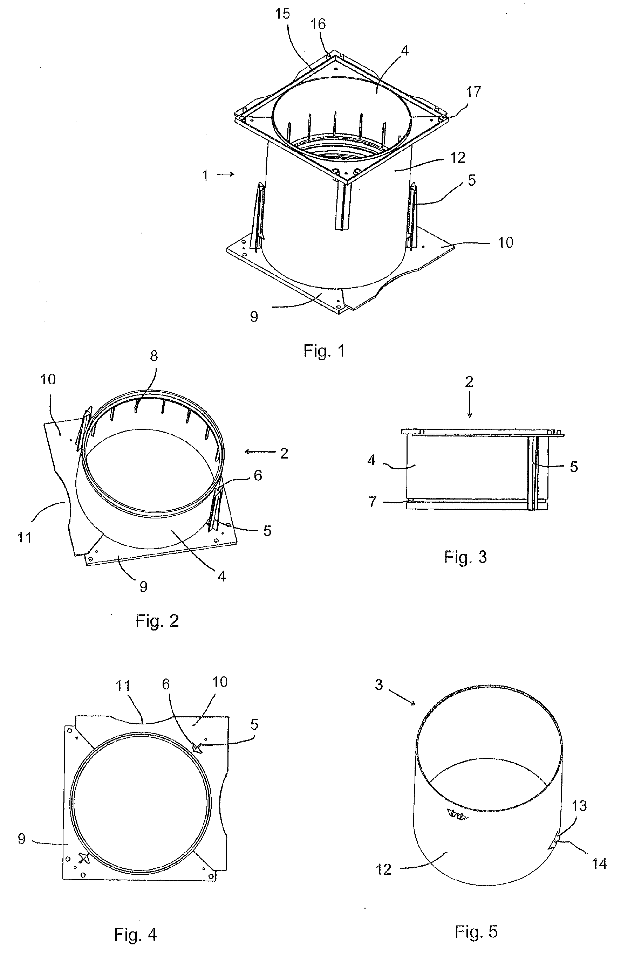

Fig. 1 is a perspective view of a cable intake according to the present invention;
Fig. 2 is a perspective view of one part of the cable intake of Fig. 1;
Fig. 3 is a side view of the part of Fig. 2;
Fig. 4 is a plan view of the part of Figs. 2 and 3;
Fig. 5 is a perspective view of another part of the cable intake of Fig. 1; and
Figs. 6a-c are perspective views of a number of cable intakes of Fig. 1 assembled to different cable intake systems.

### Detailed Description of Preferred Embodiments

The cable, pipe or duct intake 1 according to the present invention is formed of three base parts, two end parts 2 and one intermediate part 3. The end parts 2 are arranged displaceable in relation to the intermediate part 3. One end part 2 is placed at each end of the intermediate part 3. By the displaceable arrangement of the end parts 2 in relation to the intermediate part 3 the cable intake 1 can be adapted to walls of different thickness.

The end parts 2 are identical. Each end part 2 has a central, circular muff 4. The muff 4 forms a cylindrical tube open at both ends. At one end of the muff 4 a flange is arranged on the outside of the muff 4, forming a generally rectangular periphery. The flange is formed in one piece with the end part 2. The flange has two flange parts 9, 10 forming two adjacent sides of the generally rectangular periphery each. One of the flange parts 9 is placed somewhat lower than the other flange part 10 in such a way that an edge is formed between the flange parts 9, 10. The height of the edge corresponds with the thickness of one flange part 10. The flange parts 9, 10 are formed in such a way that if two cable intakes 1 are placed adjacent each other, one flange part 10 of one cable intake 1 will be placed on top of one flange part 9 of the adjacent cable intake 1. The flange has a rectangular edge or frame 15 going outside and around the muff 4. The frame 15 is an integrated part of the flange. The frame 15 forms the edge of the lower of the flange parts 9. The second flange part 10 extends slightly outside the frame 15. It is the part extending outside the frame 15 that will be placed on top of a flange part 9 of an adjacent cable intake 1. On each part extending outside the frame 15 the flange part 10 has a recess 11. The form of each recess 11 is adapted to the form of the muff 4. The purpose of the recesses 11 will be explained further below.

The second flange part 10 has a number of pins 16 on the side facing the frame 15, extending a distance about equalling the thickness of the frame 15. In the shown embodiment there are four pins 16, all placed outside the frame 15. Two of the pins 16 are placed on each side of a corner of the frame 15, while the other two pins 16 are placed at the ends of the second flange part 10 close to one further corner each of the frame 15. The first flange part 9 has a number of holes 17. In the shown embodiment there are four holes 17. Two of the holes 17 of the first flange part 9 are placed adjacent one corner and are placed diametrically opposite to the two 9 pins 16 of the second flange part 10 placed adjacent each other at one corner. The other two holes 17 are placed at diametrically opposite corners of the first flange part 9 adjacent the second flange part 10. The holes 17 of the first flange part 9 of one cable intake 1 is to receive the pins 16 of the second flange part 10 of adjacent cable intakes 1 when a system of cable intakes 1 is formed.

At two opposite corners of the flange a holding pin 5 is placed. One holding pin 5 is placed on each flange part 9, 10. The holding pins 5 extend along the muff 4 and generally the same distance as the muff 4. On the side facing the muff 4 the holding pins 5 has two inclined surfaces forming an apex 6 directed towards the muff 4. The apex 6 extends the full length of the holding pin 5.

At the free end of the muff 4, i.e. the end remote from the flange parts 9, 10, a circumferential groove 7 is arranged a short distance from the end and on the outer side, which groove 7 goes all the way round the muff 4. The groove 7 is to receive a sealing. Below the groove 7 a number of axial ribs 8 are formed on the inside of the muff 4. The axial ribs 8 are parallel and placed with equal spacing. The axial ribs 8 extend about half the way towards the end of the muff 4 at which the flange parts 9, 10 are arranged. The purpose of said ribs 8 is to strengthen the muff 4 and also to form a stop for a possible sealing received inside the muff 4.

The intermediate part 3 has the form of a pipe 12. On the outside of the pipe 12 a number of holding devices 13 are arranged. The holding devices 13 are to co-operate with the holding pins 5 of the end parts 2. In the shown embodiment there are four holding devices 13 and seen in circumferential direction the four holding devices 13 are equally spaced. However, two of the holding devices 12 are placed adjacent one end of the pipe 12 each. The holding devices 13 placed at respective end of the pipe 12 are placed diametrically opposite each other. In the middle of each holding device 13 a slit 14 is formed, which slit 14 is to receive the apex 6 of a holding pin 5 of one of the end parts 2.

In use one end part 2 each is placed at respective ends of the intermediate part 3. The muffs 4 of the end parts 2 are placed inside the pipe 12 of the intermediate part 3, which pipe 12 is placed between the muff 4 and the holding pins 5 of each end part 2. The end parts 2 are placed with the apex 6 of the holding pins 5 in the slits 14 of the holding devices 13 of the intermediate part 3. On the inclined surfaces forming the apex 6 of the holding pins 5 a number of notches are formed. The sides of the slit 14 of each holding device 13 are to snap into the notches. By means of co-operation between the notches of the apexes 6 and the slits 14 the end parts may be placed and locked in different positions in relation to the intermediate part 3 in that the sides of the slits 14 will snap into the notches. The slits 14 and notches are such that the positions of the end parts 2 are held relatively secure but still lose enough for the end parts to be displaced by hand. The notches may have any suitable form and in one embodiment the sides of each apex 6 are saw-tooth shaped.

The end parts 2 are placed on the intermediate part 3 in such a way that the position for one recess 11 on one flange part 10 of each end part 2 is the same as the position for one of the recesses 11 of the other end part 2. The other recesses 11 of respective end part 2 are not placed in the same position. Thus, the formed cable intake 1 has two recesses on one side, one recess on each adjacent side and no recess on the fourth side of the formed cable intake 1.

Normally the cable intake system or a single cable intake 1 of the present invention is placed in a wall of a building in connection with forming of the wall. The end parts 2 are displaced on the intermediate part 3 a distance adapted to the thickness of the wall. The present invention is mainly developed for concrete walls but a person skilled in the art realises that it may be used for many types of walls, irrespectively of the material of the wall. When used for concrete walls the cable intake or cable intakes 1 is placed in a form, with the flange parts 9, 10 of each cable intake 1 at the ends of the form. Thereby the cable intake(s) 1 is adapted to the thickness of the form by appropriate displacing of the end parts 2 in relation to the intermediate part 3. After the form has been filled with concrete, the concrete has set and the form has been taken away, a wall has been formed containing the cable intake(s) 1.

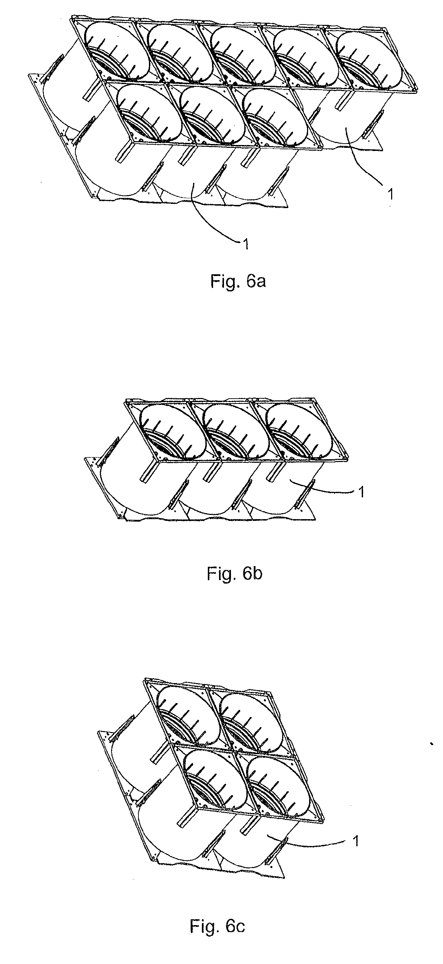

As indicated in Figs. 6a-c a number of cable intakes 1 may be placed together in different patterns. The number of cable intakes 1 placed together depends on the estimated need in each specific case. When a number of cable intakes 1 are placed together, the pins 16 of the flange part 10 placed outside the frame 15 are received in openings 17 at the frame of an adjacent cable intake 1. One or more recesses 11 of one cable intake 1 will then be placed at an adjacent intermediate part 3 in the form of a pipe 12. Furthermore, the extending part of one flange part 10 will be placed on top of a flange part 9 of an adjacent cable intake 1. In the example of Fig. 6a eight cable intakes 1 are placed in two rows, with five cable intakes 1 in one row and three cable intakes 1 in the other row. In Fig. 6b three cable intakes 1 are placed in one straight row and in Fig. 6c four cable intakes 1 are placed in a square form. A person skilled in the art realises that in other embodiments the number of cable intakes 1 and how they are placed in the cable intake system may vary extensively.

## Claims

1. A cable, pipe or duct intake (1), comprising two end parts (2) arranged mutually displaceable on an intermediate part (3), which intermediate part (3) has the form of a pipe (12), wherein the two end parts (2) are identical, wherein each end part (2) has the form of a muff (4) with a flange at one end of the muff (4), which flange forms a generally rectangular periphery outside the muff (4) of each end part (2), and wherein each muff (4) has a central through opening,, **characterized in that** the flange is made in one piece with the end part (2), that the flange has a first flange part (9) and a second flange part (10) and that the first flange part (9) is placed lower than the second flange part (10), giving an edge between the flange parts.

2. The cable intake (1) of claim 1, **characterized in that** the second flange part (10) has two recesses (11) on two adjacent sides of the formed generally rectangular periphery, which recesses (11) are formed after the muff (4), and that two holding pins (5) are placed at diametrically opposite sides of the muff (4) with one holding pin (5) on each flange part (9, 10).

3. The cable intake (1) of claim 2, **characterized in that** the flange has an outer edge forming a rectangular frame (15), which rectangular frame (15) goes all the way around the muff (4), that parts of the second flange part (10) extend outside the rectangular frame (15) and that the recesses (11) are placed on the parts of the second flange part (10) extending outside the frame (15).

4. The cable intake (1) of claim 1, **characterized in that** a groove (7) going all around the muff (4) of each end part (2) is formed close to the end of the muff (4) opposite the end at which the flange is placed, which groove (7) is to receive a sealing.

5. The cable intake (1) of claim 1, **characterized in that** the intermediate part (3) has holding devices (13) on the outside of the pipe (12), which holding devices have a central slit (14) and that four holding devices (13) are arranged equally spaced in circumferential direction on each intermediate part (3) with two diametrically opposite holding devices (13) placed at each end of the pipe (12) of the intermediate part (3).

6. The cable intake (1) of claim 1 and 5, **characterized in that** the pipe (12) of the intermediate part (3) is placed between the muffs (4) and the holding pins (5) of the end parts (2), that the holding devices (13) are placed for co-operation with the holding pins (5) and that an apex (6) of each holding pin (5) is received in the slit (14) of a holding device (13).

7. The cable intake (1) of claim 6, **characterized in that** a number of notches are formed on the inclined surfaces of the apex (6) of each holding pin (5) into which notches the sides of the slit (14) of the holding device at the holding pin (5) snap to lock the position of each end part (2) in relation to the intermediate part (3).

8. A system of cable intakes (1) according to any of the previous claims, **characterized in that** two or more cable intakes (1) are connected to each other in a straight row or in straight rows.

9. The system of claim 8, **characterized in that** adjacent cable intakes (1) are placed with a central circular part of one cable intake (1) in at least one recess (11) of an adjacent cable intake (1) and that the cable intakes (1) are held together **in that** pins (16) of one cable intake (1) are received in holes (17) of adjacent cable intakes (1).

## Patentansprüche

1. Ein Kabel -, Leitungs -, oder Kabelkanaleinlass (1) umfassend zwei Endstücke (2), die gegeneinander verlagerbar an einem Zwischenteil (3) angeordnet sind, wobei das Zwischenteil (3) die Form einer Röhre (12) hat, wobei die beiden Endteile (2) identisch sind, wobei jedes Endteil (2) die Form einer Muffe (4) hat, mit einem Flansch an einem Ende der Muffe (4), wobei der Flansch einen im Wesentlichen rechtwinkligen Umfang außerhalb der Muffe (4) jedes Endteils (2) formt und wobei jede Muffe (4) eine zentrale Durchgangsöffnung aufweist, **dadurch gekennzeichnet, dass** der Flansch aus einem Stück mit dem Endteil (2) hergestellt ist, dass der Flansch ein erstes Flanschteil (9) und ein zweites Flanschteil (10) aufweist und dass das erste Flanschteil (9) tiefer als das zweite Flanschteil (10) angeordnet ist, wodurch eine Kante zwischen den Flanschteilen gebildet wird.

2. Kabeleinlass (1) gemäß Anspruch 1, **dadurch gekennzeichnet, dass** der zweite Flanschteil (10) zwei Aussparungen (11) an zwei aneinander angrenzenden Seiten des im Wesentlichen rechtwinklig geformten Umfangs aufweist, wobei die Aussparungen (11) nach der Muffe (4) geformt sind und wobei zwei Haltestifte (5) an diametral gegenüberliegenden Seiten der Muffe (4) angebracht, sind mit einem Haltestift (5) an jedem Flanschteil (9, 10).

3. Kabeleinlass gemäß Anspruch 2, **dadurch gekennzeichnet, dass** der Flansch eine äußere Kante aufweist, die einen rechtwinkligen Rahmen (15) formt, wobei der rechtwinklige Rahmen (15) sich komplett um die Muffe (4) erstreckt, dass Teile des zweiten Flanschteils (10) sich außerhalb des rechtwinkligen Rahmens (15) erstrecken und, dass die Aussparungen (11) auf den Teilen des zweiten Flanschstücks (10) angeordnet sind, die sich außerhalb des Rahmens (15) erstrecken.

4. Kabeleinlass (1) gemäß Anspruch 1 **dadurch gekennzeichnet, dass** eine Nut (7), welche komplett um die Muffe (4) jedes Endteils (2) verläuft, nahe an einem Ende der Muffe (4) geformt ist, gegenüber dem Ende an dem der Flansch platziert ist, wobei die Nut (7) dazu eingerichtet ist eine Dichtung aufzunehmen.

5. Kabeleinlass (1) gemäß Anspruch 1, **dadurch gekennzeichnet, dass** der Zwischenteil (3) Halteeinrichtungen (13) an der Außenseite der Röhre (12) aufweist, wobei die Halteeinrichtungen einen zentralen Schlitz (14) aufweisen und wobei vier Halteeinrichtungen (13) gleichmäßig beabstandet in Umfangsrichtung auf jedem Zwischenteil (3) angeordnet sind, mit zwei diametral gegenüberliegenden Halteeinrichtungen (13), platziert an jedem Ende der Röhre (12) des Zwischenteils (3).

6. Kabeleinlass (1) gemäß Anspruch 1 und 5, **dadurch gekennzeichnet, dass** die Röhre (12) des Zwischenteils (3) zwischen den Muffen (4) und den Haltestiften (5) der Endteile (2) platziert ist, dass die Halteeinrichtungen (13) zum Zusammenwirken mit den Haltestiften (5) angeordnet sind und dass eine Spitze (6) jedes Haltestiftes (5) in dem Schlitz (14) einer Halteeinrichtung (13) aufgenommen wird.

7. Kabeleinlass (1) gemäß Anspruch 6, **dadurch gekennzeichnet, dass** eine Anzahl an Einschnitten in den geneigten Oberflächen der Spitze (6) jedes Haltestiftes (5) geformt sind, wobei die Seiten des Schlitzes (14) der Halteeinrichtung in diese Einschnitte an dem Haltestift (5) einrasten, um die Position jedes Endteils (2) in Relation zu dem Zwischenteil (3) zu sichern.

8. Ein System von Kabeleinlässen (1) gemäß irgendeines der vorstehenden Ansprüche, **dadurch gekennzeichnet, dass** zwei oder mehr Kabeleinlässe (1) miteinander in einer geraden Reihe oder in geraden Reihen verbunden sind.

9. System gemäß Anspruch 8, **dadurch gekennzeichnet, dass** nebeneinanderliegende Kabeleinlässe (1) mit einem zentralen kreisförmigen Teil eines Kabeleinlasses (1) in zumindest einer Aussparung (11) eines benachbarten Kabeleinlasses (1) platziert sind und dass die Kabeleinlässe (1) dadurch zusammengehalten werden, dass Stifte (16) eines Kabeleinlasses (1) in Aussparungen (17) benachbarter Kabeleinlässe (1) aufgenommen werden.

## Revendications

1. Admission de câble, tuyau ou conduite (1), comprenant deux parties d'extrémité (2) agencées mutuellement déplaçables sur une partie intermédiaire (3), laquelle partie intermédiaire (3) a la forme d'un tuyau (12), dans laquelle les deux parties d'extrémité (2) sont identiques, dans laquelle chaque partie d'extrémité (2) a la forme d'un manchon (4) avec une bride au niveau d'une extrémité du manchon (4), laquelle bride forme une périphérie globalement rectangulaire à l'extérieur du manchon (4) de chaque partie d'extrémité (2), et dans laquelle chaque manchon (4) a une ouverture traversante centrale, **caractérisé en ce que** la bride est réalisée en une pièce avec la partie d'extrémité (2), **en ce que** la bride a une première partie de bride (9) et une seconde partie de bride (10) et **en ce que** la première partie de bride (9) est placée plus bas que la seconde partie de bride (10), formant un bord entre les parties de bride.

2. Admission de câble (1) selon la revendication 1, **caractérisée en ce que** la seconde partie de bride (10) a deux évidements (11) sur deux côtés adjacents de la périphérie de forme globalement rectangulaire, lesquels évidements (11) sont formés au-delà du manchon (4), et **en ce que** deux goujons de retenue (5) sont placés au niveau de côtés diamétralement opposés du manchon (4) avec un goujon de retenue (5) sur chaque partie de bride (9, 10).

3. Admission de câble (1) selon la revendication 2, **caractérisée en ce que** la bride a un bord externe formant un cadre rectangulaire (15), lequel cadre rectangulaire (15) fait tout le tour du manchon (4), **en ce que** des parties de la seconde partie de bride (10) s'étendent à l'extérieur du cadre rectangulaire (15) et **en ce que** les évidements (11) sont situés sur les parties de la seconde partie de bride (10) s'étendant à l'extérieur du cadre (15).

4. Admission de câble (1) selon la revendication 1, **caractérisée en ce qu'**une rainure (7) faisant tout le tour du manchon (4) de chaque partie d'extrémité (2) est formée à proximité d'une extrémité du manchon (4) opposée à l'extrémité au niveau de laquelle la bride est placée, laquelle rainure (7) est destinée à recevoir un scellement.

5. Admission de câble (1) selon la revendication 1, **caractérisée en ce que** la partie intermédiaire (3) a des dispositifs de retenue (13) sur l'extérieur du tuyau (12), lesquels dispositifs de retenue ont une fente centrale (14) et **en ce que** quatre dispositifs de retenue (13) sont agencés espacés de façon égale dans la direction circonférentielle sur chaque partie intermédiaire (3) avec deux dispositifs de retenue diamétralement opposés (13) placés au niveau de chaque extrémité du tuyau (12) de la partie intermédiaire (3).

6. Admission de câble (1) selon les revendications 1 et 5, **caractérisée en ce que** le tuyau (12) de la partie intermédiaire (3) est placé entre les manchons (4) et les goujons de retenue (5) des parties d'extrémité (2), **en ce que** les dispositifs de retenue (13) sont placés afin de coopérer avec les goujons de retenue (5) et **en ce qu'**un sommet (6) de chaque goujon de retenue (5) est reçu dans la fente (14) d'un dispositif de retenue (13).

7. Admission de câble (1) selon la revendication 6, **caractérisée en ce qu'**un certain nombre d'encoches sont formées sur les surfaces inclinées du sommet (6) de chaque goujon de retenue (5), dans lesquelles encoches les côtés de la fente (14) du dispositif de retenue au niveau du goujon de retenue (5) s'enclenchent pour verrouiller la position de chaque partie d'extrémité (2) en relation à la partie intermédiaire (3).

8. Système d'admissions de câble (1) selon l'une quelconque des revendications précédentes, **caractérisé en ce que** deux admissions de câble (1) ou plus sont mutuellement raccordées en une rangée droite ou plusieurs rangées droites.

9. Système selon la revendication 8, **caractérisé en ce que** des admissions de câble (1) adjacentes sont placées avec une partie circulaire centrale d'une admission de câble (1) dans au moins un évidement (11) d'une admission de câble (1) adjacente et **en ce que** les admissions de câble (1) sont maintenues ensemble, **en ce que** des goujons (16) d'une admission de câble (1) sont reçus dans des trous (17) d'admissions de câble (1) adjacentes.
